# EUROPÄISCHE PATENTSCHRIFT

(11) **EP 0 644 102 B1**
(45) Veröffentlichungstag und Bekanntmachung des Hinweises auf die Patenterteilung: **22.03.2000**
(21) Anmeldenummer: 94250213.9
(22) Anmeldetag: 27.08.1994
(51) Int. Cl.: B62D 7/15, E01H 1/00

(54) **Verfahren und Einrichtung zum Führen eines Strassenfahrzeuges, vorzugsweise in engen Verkehrsflächen**
Process and device for guiding a road vehicle particularly in narrow traffic areas
Procédé et dispositif pour diriger un véhicule routier en particulier dans des aires de circulation étroites

(30) Priorität: 20.09.1993 DE 4332287; 06.05.1994 DE 4416790
(43) Veröffentlichungstag der Anmeldung: 22.03.1995
(73) Patentinhaber: Kroll Spezialfahrzeuge GmbH, 12489 Berlin (DE)
(72) Erfinder: Füssl, Heinrich, D46537 Dinslaken (DE)
(74) Vertreter: Erich, Dieter

(56) Entgegenhaltungen:
- EP-A- 0 291 844
- EP-A- 0 463 310
- DE-A- 4 302 527
- PATENT ABSTRACTS OF JAPAN vol. 14, no. 42 (M-0925) 25. Januar 1990 & JP-A-01 273 770 (ISUZU MOTORS LTD) 1. November 1989
- PATENT ABSTRACTS OF JAPAN vol. 14, no. 583 (M-1064) 26. Dezember 1990 & JP-A-02 254 061 (MAZDA MOTOR CORP) 12. Oktober 1990
- PATENT ABSTRACTS OF JAPAN vol. 14, no. 319 (M-0996) 9. Juli 1990 & JP-A-02 106 473 (ISUZU MOTORS LTD) 18. April 1990

## Beschreibung

Die Erfindung betrifft ein Verfahren zur Vermeidung von Kollisionen eines allradgelenkten, sich auf kleinen Verkehrsflächen bzw. in engen Verkehrsräumen bewegenden Straßenfahrzeugs mit Hindernissen, wie Randsteinen, Straßenbäumen oder abgestellten Fahrzeugen, indem durch am Fahrzeug vorgesehene Meßfühler der Abstand des Fahrzeuges und die Lage seiner Längsachse zu den als Bezugsorte dienenden Hindernissen, wie Randsteinen, Straßenbäumen, abgestellte Fahrzeuge u.ä. erfaßt und zum Zweck des Eingreifens in die Hinterradlenkung von einem Rechner ausgewertet wird, wobei es sich bei dem Straßenfahrzeug um ein Fahrzeug für den Einsatz im Ver- und Entsorgungsbereichen handelt, an dessen Fahrzeugrahmen ausschwenkbare Arbeitsaggregate ausgebildet sind. Weiterhin betrifft die Erfindung eine Einrichtung zur Durchführung des Verfahrens.

Es ist bekannt, daß die innerstädtischen Bereiche größerer Städte sehr eng begrenzte Verkehrsflächen aufweisen und somit vor allem für großräumige Nutzfahrzeuge wenig oder kaum eine Möglichkeit zum Manövrieren auf zumeist kleinen Verkehrsflächen bleibt. Deshalb kommt insbesondere in Innenstadtbereichen der Wendigkeit von Nutzfahrzeugen, vorzugsweise größere Beladungskapazität und Dimension, eine immer größere Bedeutung zu.
Die Gründe sind darin zu sehen, daß
a) die Innenstädte zumeist eine historisch bedingte, enge Bebauung mit schmalen, verwinkelten Straßen und spitzwinkeligen Abzweigungen aufweisen,
b) durch die zunehmende Verkehrsdichte sowie das Belegen von Verkehrsflächen des ruhenden Verkehrs durch parkende Fahrzeuge, oftmals bis in den Kreuzungsbereich hinein und
c) durch verkehrsberuhigende Maßnahmen, wie z.B. Inseln, Ausbuchtungen und gewollt enge Stellen zur Eingrenzung der Fahrzeuggeschwindigkeit, welche die Verkehrsbewegungen sehr einschränken, wobei das Begrünen von Verkehrsfreiflächen zunimmt,
dem Fahrzeugverkehr weniger Platz zur Verfügung steht.
Da gerade die Innenstadtbereiche größerer Städte ein Ballungsgebiet von Gewerbe- und Geschäftsvierteln sowie von Wohngebieten darstellen, sind für eine Ver- und Entsorgung solcher Stadtgebiete erhebliche Nachteile gerade durch eingeschränkte Verkehrsbedingungen zu erwarten, die sich nachteilig auf deren Wirtschaftsstruktur niederschlagen können. Da die Ver- und Entsorgung der Geschäfts- und Wohnviertel immer größeren Transportbedarf erfordert, sind für diese Vorgänge auch größere Transportfahrzeuge notwendig. Diese Fahrzeuge sind größer dimensioniert und kollidieren deshalb mit dem vorhandenen geringen Platzangebot an Flächen des bewegten und ruhenden Verkehrs.

Durch ihre größeren Abmessungen sind sie wenig wendig und bedürfen zum Rangieren größerer Freiräume. Den Anforderungen zur Beseitigung der Mängel versuchen eine Reihe von Fahrzeugherstellern, insbesondere Hersteller von Nutzfahrzeugen, welche im kommunalen Bereich, z. B. für die Entsorgung von Müll und für das Straßenkehren zum Einsatz gelangen, entgegenzuwirken. Sie bedienen sich dazu verschiedener technischer Mittel, beginnend mit der Verkleinerung der Beladungsgröße der Fahrzeuge bis zur technischen Perfektionierung der Manövrierfähigkeit. Die Verringerung der Beladungsfähigkeit, d.h. die Verkleinerung der Transportleistungen, erfordert gerade im kommunalen Bereich eine größere Anzahl an zusätzlichen Fahrzeugen, die dann wieder ihre Ladung zum Weitertransport auf größere Fahrzeuge übertragen müssen. Dadurch entstehen
- höhere Umladekosten;
- die Personalkosten vervielfachen sich;
- die Verkehrsbelastung in den Ballungszentren nehmen durch die höhere Fahrzeugfrequenz weiter zu;
- der Energieverbrauch und die Umweltverschmutzung im Innenstadtbereich vergrößern sich.

Eine Verbesserung der technischen Voraussetzungen, also eine höhere Manövrierfähigkeit, mit der Voraussetzung eines großvolumigen Fahrzeuges, ist dergestalt realisiert worden, daß eine Kehrmaschine mit einer Allradlenkung versehen ist. Diese Kehrmaschine, angeboten durch die Fa. RAVO Kommunal Fahrzeuge GmbH, kann unkompliziert mit geringen Wenderadien in kleine Verkehrsflächen einfahren und sich daraus wieder entfernen. Diese Allradlenkung bietet in der Regel in jeder Fahr- und Rangiersituation erhebliche Vorteile für ein schnelleres und präziseres Bewältigen der komplizierten Verkehrssituation in der Innenstadt, weist jedoch einen entscheidenden Nachteil auf. Fahrzeuge dieser Art sind durch die engen Verkehrsflächen gezwungen, seitlich an die Bordsteine der Gehwege heranzufahren. Lenkt nun der Fahrer mit einer Allradlenkung bei einer solchen Situation mit starkem Lenkeinschlag zur Bordkante abgewendeten Seite, um beispielsweise aus einer Parklücke herauszufahren, würde das ausgelenkte Hinterrad der Allradlenkung auf den Bordstein zu lenken und auf diesen auffahren, bei größerer Beladung des Fahrzeuges den Gehweg beschädigen, am Straßenrand aufgestellte Schilder und Beleuchtung mit dem Fahrzeugheck rammen und sogar unbeteiligte Fußgänger überfahren. Auch die gedachte Möglichkeit, den Sichtbereich des Fahrers zu vergrößern, kann diesen Mangel nicht abhelfen, da der Fahrer auf Grund der vielen Bedienanforderungen nicht in der Lage ist, ständig zu erkennen, ob oder wann bei derartigen Lenkmanövern die Hecklenkung außer Kraft zu setzen oder in Betrieb zu nehmen ist, zumal in dieser Situation auch der rückwärtige Bereich mit dem fließenden Verkehr zusätzlich zu beachten ist. Es ist weiter bekannt, technische Möglichkeiten zur Erfassung und der optischen Anzeige des Einschlagwinkels eines gelenkten Rades eines Kraftfahrzeuges einzubauen.
Die DE OS 40 35 794 offenbart eine Vorrichtung zur optischen Anzeige des Lenkanschlages eines gelenkten Rades und der Fahrtrichtungseinstellung eines Kraftfahrzeuges. Ein Nachteil dieser Vorrichtung ist, daß die Anzeigeeinrichtung nicht automatisch in den Lenk- bzw. Fahrvorgang eingreift, sondern dem Fahrer lediglich eine Information übermittelt, daß der Einschlagwinkel erfaßt ist. Bei Überschreiten des vorher programmierten Maßes des Lenkeinschlages wird der Fahrer durch einen Hallgeber informiert.
Zur Feststellung des Abstandes eines Fahrzeuges beim Einparken in enge Parklücken, insbesondere zum Einparken von größeren Fahrzeugen, offenbart die DE OS 42 33 624 ein Abstandswarnsystem mit einem optischen Sensorsystem, welches einen Gegenstand oder ein Fahrzeug unter Berücksichtigung eines Mindestabstandes erfaßt und einer elektronischen Beschaltung zuführt, die ein geeignetes Warnsignal beim Unterschreiten des Mindestabstandes an den Fahrer gibt. Diese Vorrichtung ist lediglich eine Parkhilfe und greift nicht in das Steuersystem des Kraftfahrzeuges ein.
Die DE OS 34 38 021 offenbart ein Steuersystem für Fahrzeuge, in dem mittels elektronischer Datenverarbeitungs- und Steuersysteme das Verhältnis des gesteuerten Winkels eines Hinterrades zur Stellung des Vorderrades durch eine Steuereinrichtung in Übereinstimmung mit der Fahrzeuggeschwindigkeit gesteuert wird. Das Steuersystem weist eine Ermittlungseinrichtung für einen geraden Fahrzustand auf, die mit einer Steuereinrichtung verbunden ist, so daß eine Korrektur des gesteuerten Winkels in Übereinstimmung mit der Fahrzeuggeschwindigkeit nur dann ausgeführt wird, wenn ein gerader Fahrzustand des Fahrzeuges während einer vorbestimmten Zeitperiode aufrechterhalten wird. Diese Vorrichtung weist bei allen Vorzügen einer automatischen Steuereinrichtung den Nachteil auf, daß beim Heranfahren an Fahrzeughindernisse keine Hilfs- und Regelungsimpulse an die Steuermechanismen gegeben werden. Informationen ähnlicher Art vermittelt die DE OS 39 03 834, die an einem Kraftfahrzeug-Vierradlenksystem zur Anwendung gelangt und Signale verschiedener Sensoren über die Regelung der Lenktätigkeit der Vorder- und Hinterräder an eine Rechnereinheit gibt, die Sensor-Abnormitäten feststellt und damit eine Servolenkung zur Verbesserung der Seitenführungskraft der Vorderräder in Kraft setzt bzw. betätigt sowie die Geschwindigkeit des Fahrzeuges bei der Lenkung steuert, um einen unfallsicheren Betrieb des Systems zu erreichen.
Die US PS 4 955 443 offenbart ein ähnliches System der rechnergesteuerten Vierradlenkung von Kraftfahrzeugen.

Den vorstehend genannten Vorrichtungen ist eigen, daß sie keine Hinweise geben, die Lenkung der hinteren Räder einer Allradlenkung so zu steuern, daß die Hinterräder in bezug auf vorhandene Hindernisse separat gesteuert und bewegt werden und nicht an diese Hindernisse anstoßen bzw. sie überfahren.
Eine Gefährdung des umliegenden Verkehrsfeldes kann dadurch entstehen, daß bei Führen des Fahrzeuges innerhalb einer kontinuierlichen Bewegungsrichtung, insbesondere bei einer Kurvenfahrt, beim Annähern an ein Hindernis die Lenkung der Räder der Hinterachse, durch die Sensoren betätigt, anspricht und das Fahrzeug aus der Kontinuität seiner Bewegungsrichtung ausgelenkt wird, wobei das Heck des Fahrzeuges in der dem Hindernis entgegengesetzten Richtung ausschwenkt und damit andere Verkehrsteilnehmer und sich selbst der Gefahr einer Kollision aussetzen würde. Ein weiterer Nachteil ist darin zu sehen, daß bei Vorhandensein einer proportional abgestimmten Lenkbewegung beider Achsen der Allradlenkung bei Auslenken der Vorderachse aus der Kontinuität der Bewegungsrichtung, die eine Kurven- oder Geradeausfahrt des Fahrzeuges sein kann, die Räder der hinteren Achse der Lenkbewegung der vorderen Achse folgen würden. Da es sich hier um den Abbruch einer kontinuierlich begonnenen Bewegung handelt, würden, bedingt durch die Allradlenkung, die bei Eintritt der Änderung der Bewegungsrichtung mit ihren Hinterrädern der Stellung der Räder der Vorderachse folgt, die Räder der Hinterachse dem vorher gegebenen Lauf nicht mehr folgen und bei Vorhandensein eines Hindernisses, das eine Straßenecke sein kann, mit diesem kollidieren.
Durch die JP-A-1 273 770 ist zur Lösung dieses Problems ein Gerät zur Steuerung des Lenkwinkelverhältnisses bei einem allradgelenkten Fahrzeug bekannt geworden, welches hinsichtlich des dabei angewandten Verfahrens als gattungsbildend für die vorliegende Erfindung anzusehen ist. Bei der Vorrichtung nach der Schrift werden mittels Ultraschallsensoren der Abstand des Fahrzeugs zu einer Seitenwand sowie sein Scherwinkel bestimmt und daraus unter Einbeziehung der Fahrzeuggeschwindigkeit ein Minimalwinkelverhältnis zwischen der Vorder- und der Hinterachse abgeleitet, welches durch einen auf die Hinterachse wirkenden Steuermotor eingestellt wird.
Eine ähnliche Vorrichtung ist außerdem aus der JP-A-2 254 061 bekannt. Bei dieser Vorrichtung erfolgt der Eingriff in die Lenkung vorrangig in Auswertung der Fahrzeuggeschwindigkeit. Entsprechend der Lehre der Schrift werden die Hinterräder beim Überschreiten eines vorgegebenen Geschwindigkeitswertes in eine Iso-Phase zu den Vorderrädern gelenkt, während sie im anderen Fall in einer entgegengesetzten Phase ausgerichtet sind. Zusätzlich erfolgt eine weitere Einflußnahme auf das Lenkverhalten, wenn bereits ein Kontakt des Fahrzeugkörpers mit einem Hindernis erkannt wurde.

Der Erfindung liegt die Aufgabe zugrunde ein Verfahren zu schaffen mit dem die Kollision eines allradgelenkten Straßenfahrzeuges mit Hindernissen während seiner Bewegung durch enge Verkehrsräume unabhängig von der Fahrzeuggeschwindigkeit sicher vermieden wird. Die Aufgabe besteht weiterhin in der Schaffung einer Einrichtung, mit welcher zur Durchführung des Verfahrens auf die Lenkung eines allradgelenkten Fahrzeugs mit ausschwenkbaren Meßfühlern Einfluß genommen werden kann.

Erfindungsgemäß wird die Aufgabe dadurch gelöst, daß die Erfassung des Abstandes des Fahrzeugs und seiner Lage zu den Bezugsorte darstellenden Hindernissen durch am Fahrzeug ausgebildete, ausschwenkbare und an den Bezugsorten elastisch entlanggeführte, das Fahrzeug auf Abstand haltende mechanische Meßfühler erfolgt, so daß die Einstellung der Hinterräder des Fahrzeuges zum Einschwenken, im Falle eines parallelen Verlaufs seiner Längsachse zum Bezugsort bei einem Abstand vom Bezugsort vorgenommen wird, bei dem das Hinterrad des Fahrzeuges mit einem am Bezugsort vorbeiführenden Lenkradius abrollt, während das Einschwenken bei einer von einem parallelen Verlauf zum Bezugsort abweichenden Lage der Längsachse vorgenommen wird, wenn das Hinterrad den Mindestabstand zum Bezugsort aufweist, wobei der jeweils mit dem Einschwenken der Hinterräder der Allradlenkung begonnene Lenkvorgang beim Überschreiten des Mindestabstandes mit größer werdendem Abstand stetig weitergeführt und die Hinterräder für eine Lenkbewegung in Richtung des Bezugsortes gesperrt sind, wenn ein festgelegter Mindestabstand der Hinterachse zum Bezugsort unterschritten wird.
Somit wird ein Auslenken der Allradlenkung über die Hinterräder in Richtung der Bordkante unterbrochen und gesperrt, wenn durch den oder die Sensoren ein festgelegter Mindestabstand der Hinterachse zur Bordkante unterschritten wird, wobei der Lenkvorgang der Hinterräder der Allradlenkung begonnen und stetig vorgenommen wird, sobald der Abstand der Hinterräder einen Mindestabstand von der Bordkante wieder überschritten hat.
Vorteilhaft ist es dabei, wenn der Lenkvorgang des Hinterrades der Allradlenkung kontinuierlich so gehalten wird, daß der Lauf des Hinterrades zum Bezugsort, der eine Bordkante sein kann, bis zum Erreichen einer bestimmten Größe einer Meßstrecke parallelgehalten wird.
Eine vorteilhafte Ausgestaltung der Lösung nach der Erfindung ist darin zu sehen, daß bei dem Erkennen eines Hindernisses während der Bewegung des Fahrzeuges in einer kontinuierlichen Bewegungsrichtung die proportional abgestimmte Lenkbewegung der Achsen der Allradlenkung beendet und die Koppelung der Lenkbewegung der Vorder- und der Hinterachse unterbrochen wird. Dabei werden die Räder der Hinterachse bis nach dem Passieren des Hindernisses in einem selbständigen Lenkvorgang in der Stellung gehalten, in der sie zum Zeitpunkt des Erkennens des Hindernisses eingestellt waren und danach wieder mit der Vorderachse gekoppelt in ein proportional abgestimmtes Lenkverhältnis der Räder beider Achsen gebracht.
Es ist eine vorteilhafte Ausführungsform der Erfindung, daß die Feststellung von vorhandenen bzw. im Zuge der Bewegung des Fahrzeuges auftauchenden oder sich auf dieses selbst zubewegenden Hindernissen, mit an der rechten und an der linken Fahrzeugseite arbeitenden Meßfühlern vorgenommen und dem Rechner für ein Einstellen sowie Auslösen einer Lenkbewegung der Allradlenkung zum Umfahren des Hindernisses mitgeteilt wird. Diese Ausführungsform ist sinnvoll weitergebidet, wenn das Fahrzeug mit ausgelenkten Rädern beider Achsen der Allradlenkung unter der Voraussetzung, daß der Einschlagwinkel der Vorderräder größer ist als der beider Hinterräder, eine Kurve durchfährt, der jeweils an der Außenseite des Kurvenradius arbeitende Meßfühler außer Funktion genommen und nach Beendigung der Kurvenfahrt wieder in Betrieb genommen wird.
Eine weitere sinnvolle Ausbildung der erfindungsgemäßen Lösung ist darin zu sehen, daß bei einem vorzeitigen Erkennen des Hindernisses durch den Fahrer dieser in die automatische Steuerung der Allradlenkung eingreifen und mittels manueller Handhabung von Bedienungselementen die proportional abgestimmte Lenkbewegung der Allradlenkung abschalten kann, wodurch die Räder der Hinterachse durch Ingangsetzen der Sicherheitsschaltung in der Stellung beharren, in der sie zum Zeitpunkt des Erkennens des Hindernisses eingestellt waren und nach Passieren des Hindernisses wieder in die proportional abgestimmte Lenkbewegung der Allradlenkung zurückgeführt werden können.
Eine ebenfalls sehr sinnvolle Ausbildung der Erfindung ist darin zu sehen, daß bei Außerbetriebnahme der Meßfühler die Hinterräder des Fahrzeuges in eine Mittelstellung gelenkt und darin blockiert werden, so daß das Fahrzeug das Lenkverhalten eines gewöhnlichen Straßenfahrzeugs aufweist.
Die erfindungsgemäße Einrichtung ist dadurch ausgestaltet, daß es sich bei den ausschwenkbaren Meßfühlern um Arbeitsaggregate des Fahrzeugs handelt und auf Mitteln zur Betätigung dieser Arbeitsaggregate Sensoren und Sensorpunkte angeordnet sind und daß die von den Sensoren ermittelten und dem Bordrechner zugeführten Daten sich aus Veränderungen der zwischen ihnen und den Sensorpunkten gebildeten Meßstrecke ergeben, welche aus dem Aus- und Einschwenken der sich berührend an der Begrenzung der Verkehrsfläche entlangbewegenden Arbeitsaggregate des Fahrzeugs resultieren, so daß der Lenkvorgang der Hinterräder in Richtung der Begrenzung gesperrt ist, wenn die zwischen den Sensoren und den Sensorpunkten gebildete Meßstrecke einen festgelegten Wert unterschreitet. Dabei handelt es sich gemäß einer Ausbildung der Erfindung um hydraulisch betätigte Arbeitsaggregate auf denen die Sensoren und Sensorpunkte angeordnet sind.
Vorteilhaft ist die Einrichtung in der Weise ausgebildet, daß die Sensoren auf Stellzylindern zur hydraulischen Betätigung der Arbeitsaggregate und die Sensorpunkte auf den Stellzylindern zugeordneten und an einem das jeweilige Arbeitsaggregat tragenden Gestänge angelenkten Kolbenstangen angeordnet sind. Über die elastisch an den Bezugsorten entlangeführten Arbeitsaggregate wird dabei mittels der auf ihnen angeordneten Sensoren und Sensorpunkte der Abstand des Hinterrades und der Fahrzeuglängsachse zu einer Bordsteinkante erfaßt, die Lenkung der Hinterräder der Allradlenkung beim Unterschreiten vorgegebener Mindestabstände in einer solchen Stellung gesperrt, daß ein Auslenken nicht stattfinden und nur eine Geradeausfahrt vorgenommen werden kann.
Die Erfindung ist im Falle des Einsatzes bei einer Kehrmaschine vorteilhaft dadurch ausgebildet, daß die Sensoren und Sensorpunkte auf den bewegliches Funktionsteilen in Form ein- und ausschwenkbarer Seiten- bzw. Tellerbesen und des Saugrohres der Kehrmaschine angeordnet sind.
Die erfindungsgemäße Lösung hat den Vorteil, daß der Regelungsvorgang für die Sensorsteuerung für eine Ausrichtung der Hinterräder in einer reinen Ja-/Neinsteuerung bestehen kann oder auch in einer proportional angepaßten, kapazitiven Steuerung ausgeführt werden könnte, so daß im Vorzugsfall das Fahrzeugheck oder auch die Außenkante des den Bordkanten zugewandten Hinterrades, bei maximal ausgelenkten Vorderrädern, parallel der Seitenfläche der Bordkante solange folgen kann, bis das Fahrzeug sich auf den beschriebenen Kreisbahnen A; B, wie in der Zeichnung dargestellt bewegend, weit genug von der Bordkante entfernt hat. Die Sensoren, wahlweise einer oder zwei, könnten, auf Grund ihres vergrößerten Abstandes zwischen Bordstein und Fahrzeug, das Auslenken der Hinterräder zum vollständigen Lenkeinschlag freigeben, wobei sich das Fahrzeug von der Bordkante entfernen kann, ohne daß der Mindestabstand b unterschritten wird.
Es ist vorteilhaft, daß die Meßfühler, wie beispielsweise bei einer Kehrmaschine der Seitenbesen und der Saugschacht, eingezogen oder abgeschaltet werden können. Dabei werden automatisch die Räder der Hinterachse in eine Mittelstellung gelenkt und ein weiteres Auslenken blockiert, so daß sich für den reinen Fahrbetrieb abweichend zum Arbeitsbetrieb das Fahrverhalten eines herkömmlichen Fahrzeuges ergibt.
Es ist vorteilhaft darauf hinzuweisen, daß sich gemäß der erfindungsgemäßen Lösung die Sensoren, in Übereinstimmung mit den rechnergesteuerten Kontakten, ihre Steuerimpulse ausschließlich auf das Auslenken der Hinterachse in Richtung auf die zur Bordkante hin zugewandte Seite richten.

In der Anwendung der Erfindung ist es weiter vorteilhaft, wenn das Fahrzeug an beiden Längsseiten mit einer Sensorsteuerung für die Lenkhinterachse ausgerüstet ist, wobei es sich pragmatisch und kostengünstig darstellt, wenn die Sensorsteuerung einseitig, d. h. bei Rechtsverkehr auf der rechten Seite des Fahrzeuges und bei Linksverkehr auf der linken Seite des Fahrzeuges angeordnet ist.
Die erfindungsgemäße Lösung erhält in Varianz zu den bereits offenbarten Lösungen weitere Vorteile und Ausgestaltungen, insbesondere durch ein Sicherheitsprogramm.
Die Erfindung folgt grundsätzlich den Überlegungen, daß die ständige Funktion der Allradlenkung während des Betriebs des Fahrzeuges im Rahmen eines Normalprogramms durchgeführt wird. Beim Eintritt unvorhergesehener Vorgänge, zu denen eine Havarie und ein Annähern eines Hindernisses gehören können, ist ein Sicherheitsprogramm in der Elektronik enthalten. Dieses Sicherheitsprogramm verhindert ein unkontrollierbares, intermittierendes Lenkverhältnis der Hinterachse der Allradlenkung bei einem Defekt in dem proportional eingestellten Lenkverhältnis beider Achsen zueinander. Das Normalprogramm ist so ausgebildet, daß
1. ein direktes, proportional abgestimmtes Lenkverhältnis bei der Koppelung der Lenkung der Räder der Vorder- und Hinterachse rechnergesteuert vorgenommen wird.
2. dabei die Lenkwinkel im Rahmen des proportional abgestimmten Lenkverhältnisses der Achsen grundsätzlich der vorgesehenen Proportionalität entsprechen, wobei die Achsen vorn und hinten über einen Rechner gekoppelt sind.
3. bei allen Lenkbewegungen die Räder der Vorder- und Hinterachse in einem proportional abgestimmten Verhältnis zueinander auslenken.
4. die Sensoren in Tätigkeit sind,
5. kein Hindernis vorhanden ist.

Das Sicherheitsprogramm hat folgenden Ablauf, daß
1. durch den/oder die Sensoren oder durch den Führer des Fahrzeuges ein Hindernis erkannt,
2. das Normalprogramm ausgeschaltet wird,
3. die Hinterachse nicht dem Lenkwinkel der Vorderachse folgt, sondern
4. in der Stellung verharrt, die sie zum Zeitpunkt des Erkennens des Hindernisses hatte,
5. bis der Sensor kein Hindernis mehr erkennt,
6. danach das Normalprogramm eingestellt wird,
7. die Hinterachse sich wieder in das proportional abgestimmte Lenkverhältnis mit der Vorderachse bewegt,
8. der Vorgang entsprechend dem Normalprogramm abläuft.

Es ist erkennbar, daß bei der Feststellung eines Hindernisses das Sicherheitsprogramm durch ein Eingreifen des Rechners oder durch den Führer des Fahrzeuges gewollt eingeleitet wird und dazu führt, daß die Hinterachse durch ihre in der ursprünglichen Lage verharrende Stellung ein Umfahren des Hindernisses gewährleistet. Dabei ist es nicht entscheidend, auf welcher Seite sich das Hindernis befindet.
In der Regel wird bei der Bewegung des Fahrzeuges in einer Kreisfahrt vorrangig seine, dem kleinen Radius zugewandte Seite, bei Veränderung des Lenkwinkels der Räder der Vorderachse auf ein Hindernis auftreffen, da die dem großen Radius zugewandte äußere Fahrzeugseite mit der vorderen Fahrzeugkante an dem Hindernis bereits vorbeigeführt worden ist und das Fahrzeug in seiner Weiterbewegung sich von dem Hindernis entfernt.
Jedoch nähert sich die innere Seite des Fahrzeuges bei einer Veränderung der Kontinuität der Bewegungsrichtung dem Hindernis soweit, daß es zu einer Kollision kommen kann. Zum rechtzeitigen Vermeiden des Auftreffens auf das Hindernis bleiben dann die Räder der Hinterachse in der beim Erkennen des Hindernisses eingestellten Lenkstellung und bewegen dadurch das Fahrzeug um das Hindernis herum. Die Ablauffolge des Normalprogramms, koordiniert mit dem Eingreifen des Sicherheitsprogramms, d.h., das gewollte Einsetzen des Sicherheitsrisikos bei der Erkennung von Hindernissen entweder durch den Sensor, der seine Impulse dann einem Rechner mitteilt, welcher den Programmablauf auslöst oder durch manuelle Betätigung des Fahrers, dem das Auftreten von Hindernissen zur Kenntnis gelangt, schafft eine unbedingte Sicherheit, daß das Fahrzeug nicht unkontrolliert und plötzlich mit dem Hinterteil aus seiner Fahrtrichtung ausbricht und den Verkehr gefährdet. Das Halten der Räder der Hinterachse in der bei Erkennen des Hindernisses vorhandenen Lenkstellung schafft die Voraussetzung, um sicher um das Hindernis herumzufahren und dann die abgestimmte Lenkerproportionalität der Achsen wieder einzunehmen, wenn das Sicherheitsrisiko beseitigt ist.

Die Erfindung soll an Hand eines Ausführungsbeispieles näher erläutert werden. In der zugehörigen Zeichnung zeigen:
- Fig. 1:: ein Fahrzeug, beispielsweise ein Kehrfahrzeug, in einer Draufsicht, in einer Stellung unmittelbar an einer Bordkante;
- Fig. 2:: das Kehrfahrzeug nach Fig. 1 in einem Abstand von der Bordkante, mit vollem Lenkereinschlag aller Räder beim Ausweichen aus einer Verkehrsfläche mit einem ausreichenden Abstand von der Bordkante;
- Fig. 3:: die Stellung des Fahrzeuges mit eingezeichnetem Fahrverlauf des Fahrzeuges beim einem Lenkeinschlag aus einem Mindestabstand von der Bordkante als Demonstration der Nachteile des Standes der Technik;
- Fig. 4:: die Darstellung der Sensoranordnung bei einem Maximalabstand des Hinterrades von der Bordkante;
- Fig. 5:: die Darstellung nach Fig. 4 mit einem Minimalabstand des Hinterrades von der Bordkante;
- Fig. 6:: Die Darstellung ähnlich Fig. 4 und 5 mit unterschiedlichen Abstandsweiten von der Bordkante;
- Fig. 7:: die Bewegungsabläufe eines Kehrfahrzeuges beim Kehren in einer kleinen Verkehrsfläche mit sensorgesteuertem Allradantrieb.

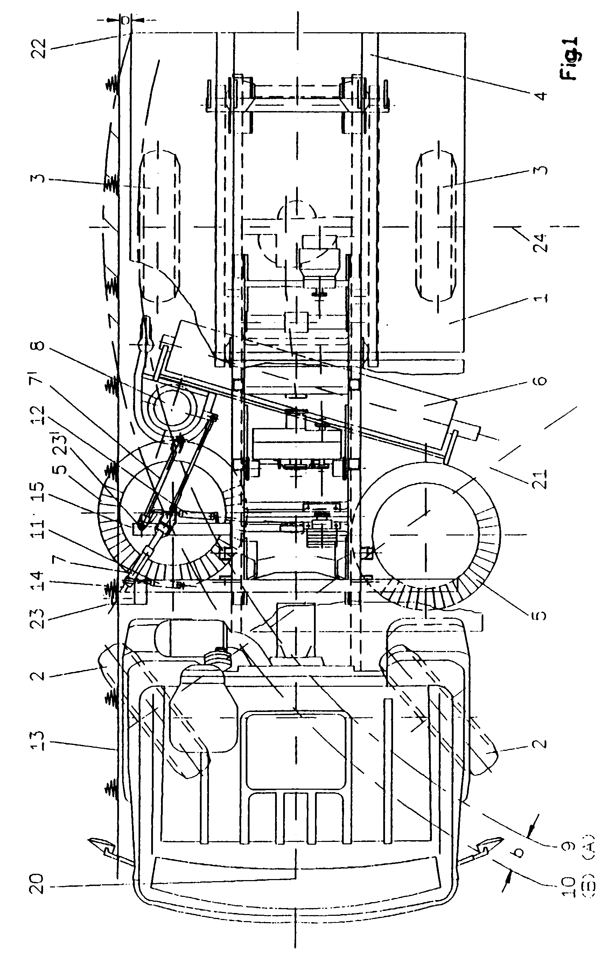

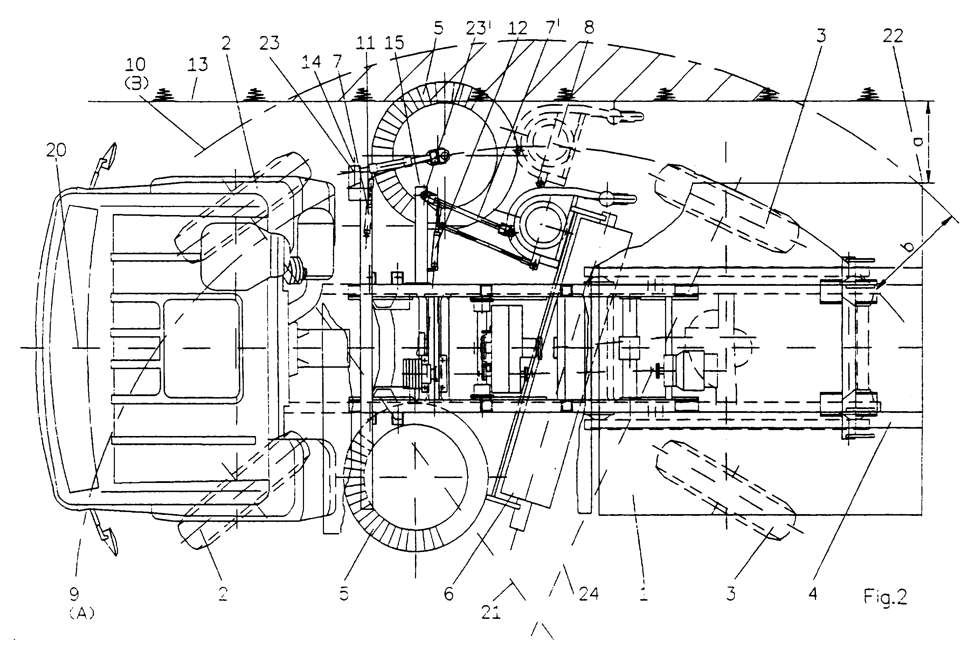

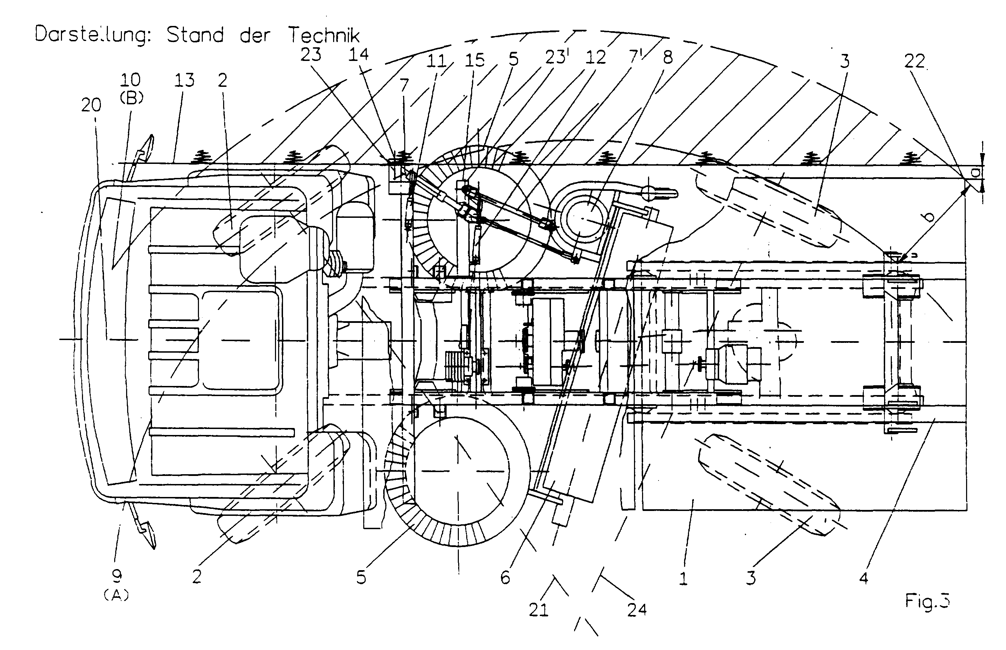

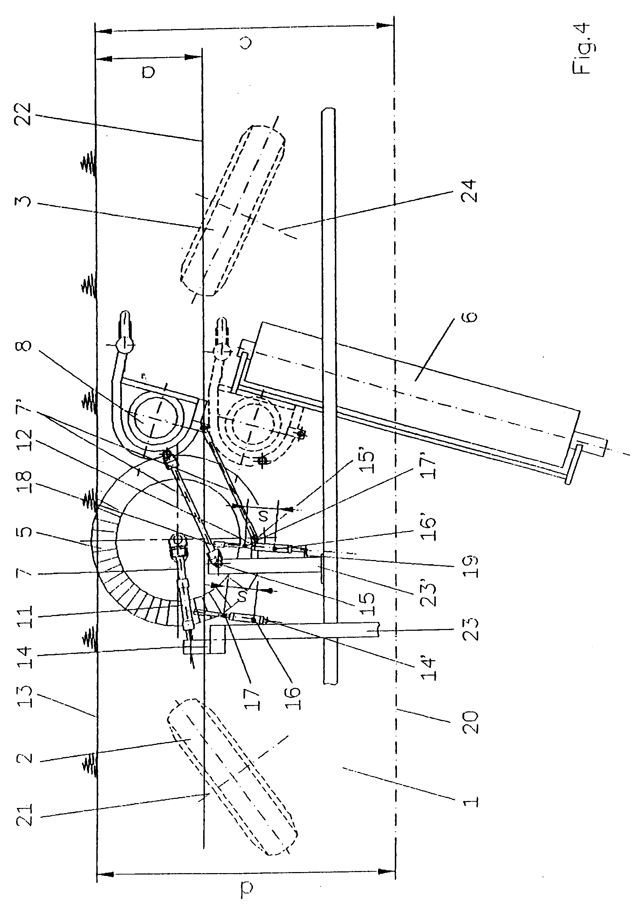

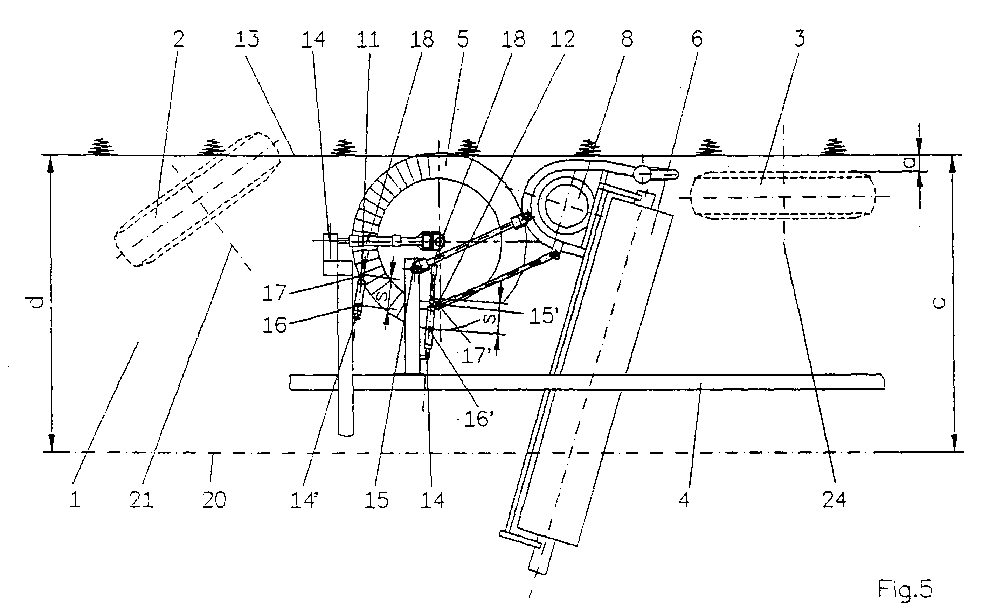

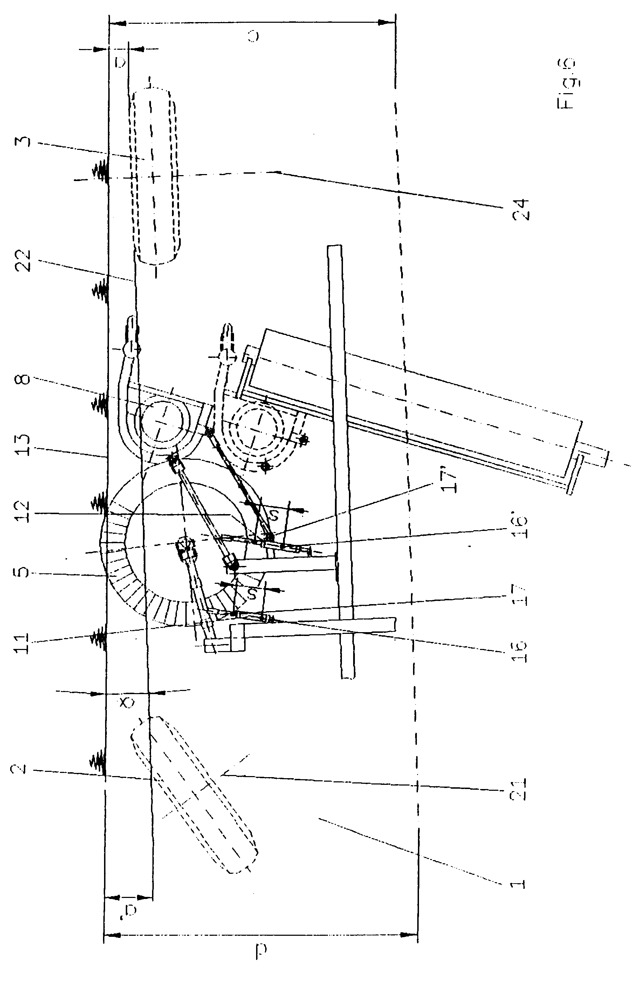

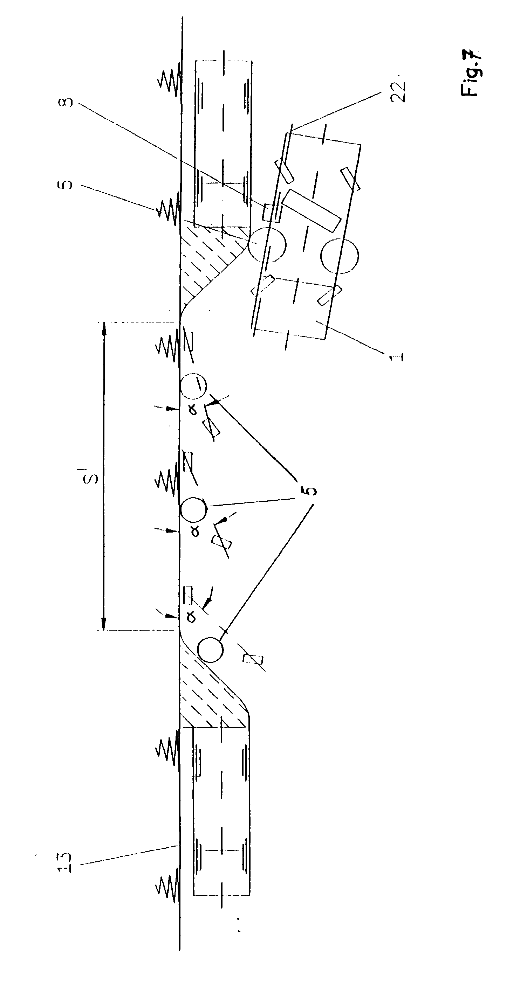

Fig. 1 zeigt ein Fahrzeug, im Beispiel ein Kehrfahrzeug, mit zwei Tellerbesen 5, einem Saugschacht 8, einem Walzenbesen 6, die unter dem Fahrzeug 1 angeordnet mit seinem Rahmen 4 verbunden sind. Das Fahrzeug 1 befindet sich mit seinem Hinterrad 3 in einem Mindestabstand a von einer Bordkante 13, wobei das Hinterrad 3 für eine Geradeausfahrt ausgerichtet und die Vorderräder 2 in einer vom Bezugsort weg eingeschlagenen Stellung sind. Mit dem Fahrzeugrahmen 4 sind die Aggregate Teller- und Walzenbesen 5, 6 sowie ein Saugschacht 8 mittels Gestänge 7 über Halterungen 23, 23' im Bereich von Anlenkpunkten 14, 15 mit dem Fahrzeugrahmen 4 verbunden. Wie aus der Darstellung zu sehen, befindet sich das dem Bezugsort zugewendete Hinterrad 3 des Fahrzeuges 1 in einem Mindestabstand a von der Bordkante 13 entfernt.
In dieser Position kann die am Fahrzeug 1 angeordnete Allradlenkung nur eingeschränkt betätigt werden, weil bei einem Lenkereinschlag der Hinterräder 3 zur Bordkante 13 hin, das an der Bordkante 13 anliegende bzw. in der Nähe positionierte Rad 3 die Bordkante 13 überfahren würde. Bei einer solchen Situation mit starkem Lenkeinschlag der Hinterräder 3 zur bordsteinzugewendeten Seite, um zum Beispiel einem parkenden Fahrzeug auszuweichen, fährt das ausgelenkte Hinterrad auf den Bordstein auf, kann unter Umständen den Gehweg beschädigen, am Straßenrand aufgestellte Schilder und Beleuchtung mit dem Fahrzeugheck rammen und sogar unbeteiligte Fußgänger gefährden. Eine derartige Situation ist zur Demonstration der Nachteile des Standes der Technik in der Fig. 3 dargestellt, welche das Fahrzeug 1 in einer Position zeigt, bei welcher der Abstand a des Hinterrades 3 des Fahrzeuges 1 von der Bordkante 13 eine minimale Größe beträgt und der Tellerbesen 5 und der Saugschacht 8 unter das Fahrzeug 1 geschwenkt sind. In dieser Lage des Fahrzeuges 1 sind seine Hinterräder 3 in die dargestellte und vorher erläuterte Stellung gebracht. An Hand dieser Darstellung zeigt sich, daß das Hinterrad 3, welches der Bordkante 13 zugewandt ist, diese nicht nur überquert, sondern dabei die Kante 22 des Fahrzeugaufbaues weit über die Bordkante 13 ausschwenkt.
Aus diesem Grund ist, wie in Fig. 2 dargestellt, die Lenkung der Hinterräder 3 in die Richtung zur Bordkante 13 gesperrt gehalten. Die Sperre wird gelöst, wenn durch eine Fahrbewegung des Fahrzeuges 1 mit einem Lenkeinschlag der Vorderräder 2 von der Bordkante 13 weg der Abstand a vergrößert wird. Dabei verläßt die Längsachse 20 des Fahrzeuges 1 ihre parallele Lage zur Bordkante 13 und der Abstand a der Vorderräder 2 zur Bordkante 13 vergrößert sich. Diese Situation ist auch in der Fig. 6 nachstehend näher beschrieben.
Dadurch, daß das Hinterrad 3 an der Bordkante 13 anliegt und die Fahrzeuglängsachse 20 parallel zur Bordkante 13 verläuft, sind die Seitenkonturen des Fahrzeuges 1 mit der Bordkante 13 kongruent und der Tellerbesen 5 mit seinem Gestänge 7 unter das Fahrzeug 1 bewegt. Dabei liegt der Tellerbesen 5 an der Bordkante 13 an. Mit dem Gestänge 7 ist ein Stellzylinder 11 verbunden, auf dem ein Sensor 16 angeordnet ist.
In einer gleichfalls unter das Fahrzeug 1 bewegten Lage befindet sich der Saugschacht 8, der an einem Gestänge 7' positioniert, in einer Grundstellung vor dem Walzenbesen 6 ist, und dessen Gestänge 7' mit einem Stellzylinder 12 bewegt wird, auf dem ein Sensor 16' befestigt ist. Fig. 2 zeigt diese Stellung, bei der der Saugschacht 8 sowie der Tellerbesen 5 aus dem Umriß der Kehrmaschine gegen die Bordkante 13 ausgeschwenkt sind und dadurch der Abstand a des Hinterrades 3 seine größte Breite erreicht hat, ohne daß der Tellerbesen den Kontakt mit der Bordkante 13 verloren hat. Dabei ist der Saugschacht 8 gleichfalls in einer ausgeschwenkten Position gezeigt, die einen reinen Saugbetrieb gestaltet. Der Saugschacht 8 wird dabei am X-el der Bordkante 13 außerhalb der Umrißkontur des Fahrzeuges 1 positioniert. Fig. 4 zeigt die Anordnung der Funktionsteile unter dem Fahrzeug 1 in einer Lage, wie sie in Fig. 2 dargestellt ist.
Der Abstand a des Hinterrades 3 des Fahrzeuges 1 zur Bordkante 13 ist groß genug, um ein sicheres Ausschwenken der eingeschlagenen Hinterräder 3 bei gelöster Sperre der Allradlenkung für das Hinterrad 3 zu gestatten, ohne die Bordkante 13 zu überfahren. In dieser Lage befinden sich der Seitenbesen 5 und der Saugschacht 8 in einer Stellung außerhalb des Umrisses des Fahrzeuges 1, wobei der Tellerbesen 5 in seiner ausgefahrenen Stellung mit dem X-el oder der Seitenfläche der Bordkante 13 noch in Berührung ist. Die Fahrzeuglängsachse 20 befindet sich in einer parallelen Lage zur Bordkante 13. Der Tellerbesen 5 und der Saugschacht 8 sind mit ihren Gestängen 7, 7' über Halterungen 23, 23' mit dem Fahrzeugrahmen 4 über die Anlenkpunkte 14, 15 verbunden und gelenkig gelagert.
Das Gestänge 7 des Tellerbesens 5 ist mit einem Stellzylinder 11 und das Gestänge 7' des Saugschachtes 8 mit dem Stellzylinder 12 beweglich verbunden. Auf den Stellzylindern 11, 12 sind Sensoren 16, 16'angeordnet, die mit Sensorpunkten 17; 17' in eine Wirkverbindung gebracht wurden, welche auf den Gelenkköpfen der Kolbenstangen der Stellzylinder 11, 12 vorgesehen sind. Zwischen den Sensoren 16, 16' und den Sensorpunkten 17, 17' bildet sich eine Strecke s aus. Die Strecke s ist veränderlich und wird durch den Stand der ausgefahrenen Kolbenstange gebildet, welche in Verbindung mit den Stellzylindern 11, 12 die Gestänge 7, 7' des Tellerbesens 5 und des Saugschachtes 8 in einer Kontaktlage zur Innenfläche der Bordkante 13 hält.
Es ist möglich, den Tellerbesen 5 mit dem Saugschacht 8 gemeinsam in eine Kontaktlage zur Bordkante 13 zu bringen, jedoch arbeiten Tellerbesen 5 und Saugschacht 8 unabhängig voneinander. Deshalb sind deren Stellzylinder 11, 12 auch mit separaten Sensoren 16, 16' und Sensorpunktanordnungen 17, 17' versehen. Es ist möglich, beide Sensoren 16, 16' gleichzeitig zu sensibilisieren, jedoch arbeiten beide Anordnungen 16, 16'; 17, 17' in der Regel in separaten Stell- und Regelkreisen in Bezug auf den Rechner.
Wie betont, kann der Saugschacht 8 auch unabhängig vom Tellerbesen 5 in eine Arbeitsstellung gebracht werden und übernimmt dabei die für die Funktion seines Sensors 16' erforderliche Kontaktfunktion. Der Sensor 16' ist dabei mit dem Rechner separat verbunden und steuert die Lenkfunktion der Hinterräder 3 unabhängig vom Tellerbesen 5. Bei der reinen Saugfunktion im pneumatischen Betrieb des Saugschachtes 8 ist der Tellerbesen 5 eingefahren und hochgeklappt. Der Sensor 16 ist aus der Funktion genommen und die Tastfunktion für den Sensor 16' durch die Seitenkante des am Saugschacht 8 angeordneten Saugmundstückes übernommen worden.
Gemäß Fig. 4 befindet sich die Längsachse 20 des Fahrzeuges 1 in einer parallelen Lage zur Bordkante 13 und der Abstand a der Hinterkante 22 des Aufbaues des Fahrzeuges 1 ist so groß bemessen, daß ein bequemes Auslenken der Hinterräder 3 durch Einschwenken der Allradlenkung erfolgen kann, ohne die Bordkante 13 zu überfahren. Der Abstand a ist hierbei so ausgebildet, daß der Tellerbesen 5 voll ausgeschwenkt ist, jedoch den Kontakt mit der Innenkante der Bordkante 13 nicht verliert. Die Zeichnung zeigt, daß die Strecken s der Sensoren 16, 16' auf den Stellzylindern 11, 12 eine sehr weite Entfernung von den Sensorenpunkten 17, 17' haben. Das bedeutet, daß die Stellzylinder 11, 12 weit ausgefahren sind. Beide Strecken s, also die Entfernung der Sensoren 16, 16' von den Sensorenpunkten 17, 17' sind annähernd maximal, jedoch gleich groß.
Fig. 5 zeigt die Stellung des Fahrzeuges 1 in bezug auf die Bordkante 13, in der gleichen Lage wie Fig. 1. Hierbei sind der Seitenbesen 5 und der Saugschacht 8 in einer unter die Aufbauten des Fahrzeuges 1 geschwenkten Stellung, und der Abstand a des Hinterrades 3 des Fahrzeuges 1 zur Bordkante 13 ist so minimal ausgebildet, daß das Hinterrad 3 an der Bordkante 13 anliegt. Die Längsachse 20 des Fahrzeuges 1 befindet sich in einem parallelen Abstand c = d von der Bordkante 13. Bei dieser Stellung des Fahrzeuges 1, also bei eingeschwenktem Tellerbesen 5 und Saugschacht 8 sind die Strecken s zwischen den Sensoren 16, 16' und den Sensorenpunkten 17, 17' auf den Stellzylindern 11, 12 sehr eng bemessen, da die Kolbenstangen in die Zylinder eingefahren sind.
In dieser Position befindet sich der Saugschacht 8 vor dem Walzenbesen 6 und sein Sensor 16' ist aus dem Steuerkreislauf ausgeschaltet. Die Kontaktfunktion übernimmt die Sensoranordnung 16, 17 des Tellerbesens 5 der mit der Bordkante 13 in Berührung gebracht worden ist. In dieser Lage ist das Hinterrad 3 für einen Lenkvorgang in die Richtung auf die Bordkante 13 gesperrt.
Die Vorderräder 2 sind in einer Lenkstellung; das Fahrzeug 1 beginnt sich in eine Position gemäß Fig. 6 zu bewegen. Diese Lage ist als Darstellung einer Möglichkeit gedacht, bei welcher der Tellerbesen 5 und der Saugschacht 8 ausgeschwenkt und mit der Bordkante 13 in Berührung gebracht worden sind. Beide Sensoren 16, 16' arbeiten selbständig, jedoch ist diese Position nicht der Regelfall. Im Regelfall ist nur der Tellerbesen 5 mit seinem Gestänge 7 gegen die Bordkante 13 gefahren.
Die Fig. 6 zeigt eine Lage des Fahrzeuges in einer sich als Lücke ausgebildeten Verkehrsfläche, aus der es im Begriff ist, herausgefahren zu werden. Bei dieser Lage des Fahrzeuges ist der Abstand a des Hinterrades 3 des Fahrzeuges 1 zur Bordkante 13 gleich dem, wie in Fig. 5 dargestellt. Die Lage der Längsachse 20 des Fahrzeuges 1 weicht in einen Winkel α vom Verlauf der Bordkante 13 ab, so daß der vordere Längsachsenabstand d von der Bordkante 13 größer als der hintere Längsachsenabstand c von der Bordkante 13 ist. Bei dieser Fahrzeugstellung beginnt der Auslenkvorgang, die Hinterräder 3 sind noch gesperrt für eine Geradeausfahrt, beginnen sich aber bereits in einem bestimmten Winkelverhältnis des Winkels α von der Bordsteinkante wegzubewegen. Dabei ist der Seitenbesen 5 immer in Berührung mit der Seitenfläche der Bordkante 13, im Beispiel kann das auch der Saugschacht 8 sein, der gleichfalls in einer äquivalenten Lage zum Tellerbesen 5 ist.

Fig. 6 zeigt, daß bei Erreichen der Größe des Winkels α bei einem Abstand a' die Sperre der Allradlenkung der hinteren Räder gelöst wird und der Lenkvorgang der Hinterräder 3 des Fahrzeuges 1 beginnt. Dabei halten die Mittenachsen 24 der Hinterräder 3 ihre lotrechte Lage zur Bordkante 13, d. h. der Rollvorgang der Hinterräder 3 verläuft parallel zur Bordkante 13, während die Lenkradmittenachse 21 in einem immer spitzeren Winkel zur Bordkante 13 bewegt wird und dazu die Größe des Abstandes d der Längsachse 20 immer größer wird. D.h., daß das Fahrzeug aus der Verkehrslücke ausschwenkt, wobei die Hinterräder 3 bis zum Erreichen des Abstandes a''; mit einer bestimmten Größe des Winkels α in bezug auf die Bordkante 13 parallel laufen und dann dem Radius der Mittenachse 24 der Hinterräder 3 folgend den Abstand vergrößernd die Bordkante 13 verlassen. Dabei schwenkt nur die Hinterkante 22 des Fahrzeuges 1 über die Bordkante 13 hinaus. Fig. 6 zeigt deutlich, daß die Impulsgebung für den Rechner, der die Steuerung der Allradlenkung betätigt, durch den Sensor 16 erfolgt, wenn der Saugschacht 8 in seiner Funktion dem Seitenbesen 5 zugeordnet wird.
Bei einer rein pneumatischen Aufnahme der Straßenverunreinigung durch den Saugschacht kann sich der Seitenbesen 5 in der gemäß dieser Figur dargestellten eingeschwenkten Lage und der Saugschacht 8 entfernt vom Seitenbesen in einer rein separaten ausgeschwenkten Arbeitsstellung befinden. Dazu ist der Sensor 16' auf den Stellzylinder 12 angeordnet. Bei dieser Arbeitsweise arbeiten die Sensoren 16, 16' auf den Stellzylindern 11, 12 unabhängig voneinander und geben ihre Impulse separat an den gemeinsamen Rechner ab, der dann, wie in allen anderen Arbeits- und Lenksituationen, die Impulse wichtet und die - Lenkbetätigung der Hinterachse steuert. Für eine separate Betätigung des Saugschachtes in einer rein pneumatischen Arbeitsweise gleitet der Saugschacht 8 mit einer Außenkante des Saugmundstückes an der Innenfläche der Bordkante 13 entlang. Damit sind die separaten Funktionen der Sensoren 16, 16' gesichert.
Grundsätzlich wird durch die Kontaktnahme des Tellerbesens 5 mit der Bordkante 13 der Sensor 16 mit dem Sensorpunkt 17 in ein Arbeitsverhältnis gebracht, und da in der allgemeinen Arbeitsstellung der Saugschacht 8 dem Walzenbesen 6 zugeordnet ist, ist die Sensorenanordnung 16', 17' aus dem Steuerkreislauf ausgeschaltet.
Die Steuerung des Lenkvorganges übernimmt bei dem Herausfahren des Fahrzeuges 1 aus der Verkehrslücke der mit der Bordkante 13 in Verbindung stehende Tellerbesen 5, dessen Stellzylinder 11 den Sensor 16 trägt, mittels dessen im Zusammenwirken mit dem Sensorpunkt 17 die Impulse über den Rechner an die lenkenden Hinterräder 3 gegeben werden.

Die Ausführung der Steuerung für ein Fahrzeug 1, insbesondere für ein Nutzkraftfahrzeug ist selbstverständlich nicht auf das Beispiel der Kehrmaschine beschränkt, sondern kann wie im Oberbegriff der Erfindung dargelegt, bei allen Nutzkraftfahrzeugen mit ausschwenkbaren Arbeisaggregaten Anwendung finden.
Der Vorteil der sensorgesteuerten Allradlenkung überlagert sich bei der im Ausführungsbeispiel angeführten Anwendung an einer Kehrmaschine noch dadurch, daß der Tellerbesen 5 aus der Kontur des Fahrzeuges herausschwenkbar ist und dadurch der Vorteil der Allradlenkung mit der seitlichen Heraus- oder Hineinbewegung des Tellerbesens 5 in bezug auf die Seitenkontur des Fahrzeuges dazu führt, daß bei beginnendem Kontakt am Punkt k mit der Bordkante 13, das Fahrzeug 1 bis auf einen annähernd gegen Null laufenden Abstand a zur Bordkante 13 heranfahren kann und der Seitenbesen dabei unter das Fahrzeug schwenkt. Die Hinterräder 3 des Fahrzeuges 1 bleiben während des Auslenkmanövers der Vorderräder 2 des Fahrzeuges 1 parallel zur Bordkante 13 mit dem Mindestabstand a, weil mit einer rechnergesteuerten Kontinuität mittels der Allradlenkung das Hinterrad 3 des Fahrzeuges 1 ständig in einem Parallellauf zur Bordkante 13 gelenkt wird. Dabei schwenkt, da der Auslenkvektor der Fahrzeugbewegung ein ständig größerer Winkel α der Längsachse 20 des Fahrzeuges 1 erzeugt, der Tellerbesen 5 bis in seine Endstellung aus der Umrißlinie des Kehrfahrzeuges heraus, d.h. daß in dieser Lage die Endstellung der Impulsstrecke s erreicht ist und das Fahrzeug 1 in einem notwendigen Winkel α steht, indem es eine maximale Strecke s' entlang der Bordkante 13 mit seinem Seitenbesen bearbeitet hat.
Dieser Vorgang, so wie dargestellt, ist in Fig. 7 als Bewegungsablauf einer beispielsweisen Kehrmaschine, deren Tellerbesen 5 und/oder Saugschacht 8 als Kontaktgeber für den Sensor 16, 16' benutzt werden, abgebildet. Der Vorteil der erfindungsgemäßen Lösung ist bei allen Fahrzeugen der gattungsgemäßen Art gleich, da beim Ausparken mit der sensorgesteuerten Allradlenkung ein Überfahren der Bordkante 13 vermieden wird und ein Überschwenken der Hinterkante 22 des Fahrzeuges 1 über den Fußgängerbereich, also hinter der Bordkante 13 vermieden wird.

### Aufstellung der verwendeten Bezugszeichen

- **1**: Fahrzeug
- **2**: Vorderrad
- **3**: Hinterrad
- **4**: Fahrzeugrahmen
- **5**: Tellerbesen
- **6**: Walzenbesen
- **7; 7'**: Gestänge
- **8**: Saugschacht
- **9**: innerer Radius
- **10**: äußerer Radius
- **11,12**: Stellzylinder
- **13**: Bordkante
- **13'**: Bezugsort
- **14;14';15;15'**: Anlenkpunkte
- **16;16'**: Sensor
- **17;17'**: Sensorpunkt
- **18;19**: Anlenkpunkt
- **20**: Fahrzeuglängsachse
- **21**: Lenkradmittenachse
- **22**: Kante
- **23;23'**: Halterung
- **24**: Mittenachse
- **25**: Schalter
- **26**: Leitung
- **27**: Radfahrer
- **a;a'**: Abstand
- **b**: Abstand
- **s**: Impulsstrecke
- **s'**: Impulsstrecke
- **c**: Längsachsenabstand
- **d**: Längsachsenabstand
- **α**: Winkel

## Patentansprüche

1. Verfahren zur Vermeidung von Kollisionen eines allradgelenkten, sich auf kleinen Verkehrsflächen bzw. in engen Verkehrsräumen von Ver- und Entsorgungsbereichen bewegenden Straßenfahrzeugs mit Hindernissen, wie Randsteinen, Straßenbäumen oder abgestellten Fahrzeugen u.ä., indem durch am Fahrzeug vorgesehene Meßfühler der Abstand des Fahrzeuges und die Lage seiner Längsachse zu den als Bezugsorte dienenden Hindernissen erfaßt und zum Zweck des Eingreifens in die Hinterradlenkung von einem Rechner ausgewertet wird, **dadurch gekennzeichnet, daß** die Erfassung des Abstandes des Fahrzeugs und seiner Lage zu den Bezugsorten durch am Fahrzeug ausgebildete, ausschwenkbare und an den Bezugsorten elastisch entlanggeführte, das Fahrzeug auf Abstand haltende mechanische Meßfühler erfolgt, daß die Einstellung der Hinterräder des Fahrzeuges zum Einschwenken, im Falle eines parallelen Verlaufs seiner Längsachse zum Bezugsort bei einem Abstand vom Bezugsort vorgenommen wird, bei dem das Hinterrad des Fahrzeuges mit einem am Bezugsort vorbeiführenden Lenkradius abrollt, während das Einschwenken bei einer von einem parallelen Verlauf zum Bezugsort abweichenden Lage der Längsachse vorgenommen wird, wenn das Hinterrad den Mindestabstand zum Bezugsort aufweist, wobei der jeweils mit dem Einschwenken der Hinterräder der Allradlenkung begonnene Lenkvorgang beim Überschreiten des Mindestabstandes mit größer werdendem Abstand stetig weitergeführt wird und daß die Hinterräder für eine Lenkbewegung in Richtung des Bezugsortes gesperrt sind, wenn ein festgelegter Mindestabstand der Hinterachse zum Bezugsort unterschritten wird.

2. Verfahren nach Anspruch 1, **dadurch gekennzeichnet**, daß bei einem Erkennen eines Hindernisses durch die Meßfühler während der Bewegung des Fahrzeuges in einer kontinuierlichen Bewegungsrichtung, beim Verlassen dieser kontinuierlichen Bewegungsrichtung, die proportional abgestimmte Lenkbewegung der Allradlenkung beendet wird, wobei die Koppelung der Lenkbewegung der Räder der Vorder- und Hinterachse unterbrochen und die Räder der Hinterachse bis nach dem Passieren des Hindernisses in einem selbständigen Lenkvorgang in der Stellung gehalten werden, in der sie zum Zeitpunkt des Erkennens des Hindernisses eingestellt waren und danach wieder mit der Vorderachse gekoppelt, in ein proportional abgestimmtes Lenkverhältnis gebracht werden.

3. Verfahren nach Anspruch 1 oder 2, **dadurch gekennzeichnet**, daß Hindernissen mit an der rechten und an der linken Fahrzeugseite arbeitenden Meßfühlern an beiden Seiten des Fahrzeuges festgestellt und für ein Einstellen der Allradlenkung zu ihrem Umfahren dem Rechner mitgeteilt werden.

4. Verfahren nach Anspruch 3, **dadurch gekennzeichnet**, daß beim Durchfahren einer Kurve mit ausgelenkten Rädern beider Achsen der Allradlenkung, wenn der Einschlagwinkel der Vorderräder größer ist, als der der Hinterräder, der jeweils an der Außenseite des Kurvenradius arbeitende Meßfühler außer Funktion gesetzt und nach Beendigung der Kurvenfahrt wieder in Betrieb genommen wird.

5. Verfahren nach einem der Ansprüche 1 bis 4, **dadurch gekennzeichnet**, daß bei einem vorzeitigen Erkennen eines Hindernisses durch den Fahrer dieser in die automatische Steuerung eingreifen kann, mittels manueller Handhabe von Bedienungselementen die propotional abgestimmte Lenkbewegung der Allradlenkung abgeschaltet wird und die Räder der Hinterachse in der Stellung beharren, in der sie zum Zeitpunkt des Erkennens des Hindernisses eingestellt waren, um danach wieder mit den Rädern der Vorderachse gekoppelt, in ein proportional abgestimmtes Lenkverhältnis gebracht zu werden.

6. Verfahren nach einem der Ansprüche 1 bis 5, **dadurch gekennzeichnet**, daß bei Außerbetriebnahme der Meßfühler die Hinterräder des Fahrzeuges in eine Mittelstellung gelenkt und darin blockiert werden.

7. Einrichtung zur Einflußnahme auf die Lenkung eines allradgelenkten Fahrzeugs (1) mit am Fahrzeugrahmen (4) befestigten und ausschwenkbaren Meßfühlern, durch welche das Fahrzeug (1) im bewegten sowie im ruhenden Verkehr während des unter Einsatz der Arbeitsaggregate (5; 8) erfolgenden Arbeitsbetriebes, auf kleinen, begrenzten Verkehrsflächen, wie insbesondere in durch den Bordstein und parkende Fahrzeuge begrenzten Parklücken oder anderen verkehrseingeschränkten Bereichen, sicher und unter Vermeidung von Kollisionen mit Hindernissen führbar ist, wobei an Meßstellen des Fahrzeuges (1) Sensoren (16; 16') angeordnet sind, die auf Sensorpunkte (17; 17') gerichtet, Meßstrecken (s) ausbilden und deren von den Meßstrecken (s) über die Fahrzeugposition und -lage gewonnenen Daten einem Bordrechner zugeführt werden, der mit einem Stellmechanismus der Hinterräder (3) der Allradlenkung zur Durchführung eines Lenkvorganges dieser Räder verbunden ist, **dadurch** **gekennzeichnet, daß** es sich bei den ausschwenkbaren Meßfühlern um Arbeitsaggregate (5; 8) des Fahrzeugs handelt und auf Mitteln (11; 12) zur Betätigung dieser Arbeitsaggregate Sensoren (16; 16') und Sensorpunkte (17; 17') angeordnet sind und daß die von den Sensoren (16; 16') ermittelten und dem Bordrechner zugeführten Daten durch die Veränderungen der Meßstrecke (s; s') gebildet sind, welche sich beim Aus- und Einschwenken der sich berührend an der Begrenzung (13) der Verkehrsfläche entlangbewegenden Arbeitsaggregate (5; 8) des Fahrzeugs (1) ergeben, so daß der Lenkvorgang der Hinterräder (3) in Richtung der Begrenzung (13) gesperrt ist, wenn die zwischen den Sensoren (16; 16') und den Sensorpunkten (17; 17') gebildete Meßstrecke (s) einen festgelegten Wert unterschreitet.

8. Einrichtung nach Anspruch 7, **dadurch gekennzeichnet, daß** die Sensoren (16; 16') und Sensorpunkte (17; 17') auf hydraulisch betätigten Arbeitsaggregaten (5; 8) angeordnet sind.

9. Einrichtung nach Anspruch 8, **dadurch gekennzeichnet, daß** die Sensoren (16; 16') auf Stellzylindern (11; 12) zur hydraulischen Betätigung der Arbeitsaggregate und die Sensorpunkte (17; 17') auf den Stellzylindern (11; 12') zugeordneten und an einem das jeweilige Arbeitsaggregat tragenden Gestänge (7; 7') angelenkten Kolbenstangen angeordnet sind.

10. Einrichtung nach Anspruch 8 oder 9, **dadurch gekennzeichnet, daß** bei die Sensoren (16; 16') auf den Stellzylindern (11; 12) und die Sensorpunkte (17; 17')auf den den Stellzylindern (11; 12) zugeordneten Kolbenstangen zur Betätigung des Saugschachtes (8) und des Tellerbesens (5) angeordnet sind.

## Claims

1. A method for preventing collisions of an all-wheel steered road vehicle travelling in small traffic areas or narrow traffic spaces of supply and disposal areas with obstacles, as e.g. kerb stones, road trees or parking vehicles, by measuring, with sensors that are designed to be mounted on the vehicle, the distance of the vehicle and the position of its longitudinal axis from and in relation to the obstacles that serve as places of reference, and evaluating the results in a computer for interference into the rear wheels steering, **characterised by the fact that** the distance of the vehicle and its position in relation to the places of reference is measured by mechanical sensors extending out from the vehicle and keeping it on distance by swinging out and flexibly sliding over the places of reference, and that in the event that the longitudinal axis is in a position parallel to the place of reference the rear wheels of the vehicle are adjusted for swinging around at a distance to the place of reference at which the vehicle's rear wheel rolls along the place of reference in a steering radius that passes the place of reference; in the event that the longitudinal axis is not parallel to the place of reference, the rear wheels are steered when the rear wheel is in the minimum distance to the place of reference with the steering process which starts with the swinging around of the rear wheels of the all-wheel steering system steadily continuing with increasing distances once the minimum distance is exceeded and the rear wheels being prevented from swinging into the direction of the place of reference once the distance of the rear axle to the place of reference has fallen short a fixed minimum.

2. A method as defined in Claim 1, **characterised by the fact** that in the event of the sensor's detection of an obstacle during the travelling of the vehicle in a continuous direction the proportionally adjusted steering motion of the all-wheel steering system is stopped, once the said continuous travelling direction has been left, by cutting the coupling between the steering motion of the front and the rear wheels and keeping the wheels of the rear axle in the position in which they were at the time of the detection of the obstacle until such obstacle has been passed, and then being moved into a proportionally adjusted steering relation; coupled again to the front axle.

3. A method as defined in Claim 1 or 2, **wherein** obstacles are detected on both sides of he vehicle with the aid of sensors operating on the right-hand and left-hand sides of he vehicle, and are reported to the computer for adjusting the all-wheel steering system for driving around the obstacle.

4. A method as defined in Claim 3, **characterised by the fact** that in the event of travelling around a curve with the wheels of both axles of the all-wheel steering system being steered out and the angle of the steering lock of the front wheels being wider than that of the rear wheels, the sensor which is operating at the outer side of the curve radius stops operating and re-starts operation after the completion of curve driving.

5. A method as defined in one of the Claims 1 to 4, **characterised by the fact** that in the event of early detection of an obstacle by the driver the said driver may interfere into the automatic steering system by manually switching off the proportionally adjusted steering motion of the all-wheel steering system, and the wheels of the rear axle remain in the position to which they were adjusted when the obstacle was detected, later being moved into a proportionally adjusted steering relation, coupled again to the wheels of the front axle.

6. A method as defined in one of the Claims 1 to 5, **characterised by the fact** that in the event of stop of operation of the sensors the rear wheels of the vehicle are moved into a central position and locked therein.

7. An apparatus for influencing the steering system of an all-wheel steered vehicle (1) with the aid of swing-out sensors that are mounted on the frame of the vehicle (4) by which the vehicle (1) is steerable in a way that is safe and avoids collisions with obstacles in situations of active or standstill traffic during operation, using its working aggregates (5; 8), in small, limited traffic areas, especially in parking spaces that are limited by kerbs and parking vehicles or other areas with traffic limitations, with sensors (16; 16') being arranged at measurement spots on the vehicle (1) which sensors, targeted to sensor points (17; 17'), form measurement distances (s) and pass the data of the vehicle's position which have been collected from the measurement distances (s) to a board computer which is connected to an adjusting mechanism of the rear wheels (3) of the all-wheel steering system for conducting a steering process of these wheels, **wherein** the swing-out sensors are working aggregates (5, 8) of the vehicle, and sensors (16; 16') and sensor points (17; 17') are arranged on instruments (11; 12) for operating these working aggregates, and the data established by the said sensors (16; 16') and passed to the board computer result from the alterations of the measurement distances (s; s') that are caused by the swinging-out and -in of the vehicle's (1) working aggregates (5; 8) which slide over the boundaries (13) of the traffic area so that the steering process of the rear wheels (3) towards the boundaries (13) is blocked when the measured distance (s) between the sensors (16; 16') and the sensor points (17; 17') falls below a fixed minimum.

8. An apparatus as defined in Claim 7, **wherein** the sensors (16; 16') and sensor points (17; 17') are arranged on hydraulically operated working aggregates (5; 8).

9. An apparatus as defined in Claim 8, **wherein** the sensors (16; 16') are placed on adjusting cylinders (11; 12) for the hydraulic operation of the working aggregates, and the sensor points (17; 17') are arranged on piston rods attributed to the adjusting cylinders (11; 12) and coupled to a gear (7; 7') which supports the respective working aggregate.

10. An apparatus as defined in Claims 8 or 9, **wherein** the two sensors (16; 16') are arranged on the adjusting cylinders (11; 12), and the sensor points (17; 17') are arranged on the piston rods attributed to the adjusting cylinders (11; 12) for operating the suction shaft (8) and the disk brush (5).

## Revendications

1. Procédé pour empêcher la collision d'un véhicule de voirie doté d'une traction toutes roues motrices, se déplaçant sur une surface de circulation réduite ou dans un espace étroit de circulation réservé aux livraisons ou à l'évacuation des déchets, avec des obstacles tels que bordures de chaussée, arbres sur trottoirs ou véhicules parqués ou analogues, la distance du véhicule et la position de son axe longitudinal par rapport aux obstacles ayant fonction de zones de référence étant saisies par des capteurs de mesure prévus sur le véhicule et évaluées par un calculateur aux fins d'engagement de la traction arrière, **caractérisé en ce que** la saisie de la distance du véhicule et de sa position par rapports aux zones de référence est réalisée par des capteurs de mesure mécaniques formés sur le véhicule, pivotants et conduits élastiquement le long des zones de référence, et maintenant le véhicule à distance, en ce que la commande de pivotement des roues arrière du véhicule, dans le cas d'un parallélisme de son axe longitudinal par rapport à la zone de référence, est réalisée avec une distance de la zone de référence telle que la roue arrière du véhicule pivote avec un rayon de braquage passant à côté de la zone de référence, tandis que la commande de pivotement des roues arrière dans le cas d'un positionnement non parallèle de l'axe longitudinal de véhicule par rapport à la zone de référence est réalisée quand la roue arrière présente la distance minimale à la zone de référence, le processus de braquage commencé avec le pivotement des roues arrière de la traction toutes roues motrices étant constamment poursuivi quand la distance devient supérieure à la distance minimale, l'écart s'agrandissant, et en ce que les roues arrière sont bloquées au mouvement de braquage en direction de la zone de référence, si la distance devient inférieure à une distance minimale déterminée de l'essieu arrière à la zone de référence.

2. Procédé selon revendication 1, **caractérisé en ce qu**' à la détection d'un obstacle par les capteurs de mesure pendant le déplacement continu du véhicule dans un sens, le mouvement de braquage de la traction toutes roues motrices défini proportionnellement est arrêté lorsque ce sens de déplacement continu est abandonné, le couplage du mouvement de braquage des roues des essieux avant et arrière étant interrompu et les roues de l'essieu arrière étant maintenues dans la position où elles se trouvaient au moment de la détection de l'obstacle, jusqu'à dépassement de l'obstacle par mouvement de braquage automatique, avant d'être couplées à nouveau avec l'essieu avant dans un rapport de braquage proportionnellement défini.

3. Procédé selon revendication 1 ou 2, **caractérisé en ce que** les obstacles sont détectés sur les deux côtés du véhicule par des capteurs de mesure fonctionnant sur le côté gauche et le côté droit du véhicule, et communiqués au calculateur pour la commande de traction toutes mues motrices en vue de leur contournement.

4. Procédé selon revendication 3, **caractérisé en ce qu**' au passage d'une courbe avec des roues déportées sur les deux essieux de traction toutes roues motrices, le capteur de mesure fonctionnant sur le côté extérieur correspondant au rayon de courbe sera mis hors service si l'angle de braquage des roues avant est supérieur à celui des roues arrière, avant d'être réactivé après passage de la courbe.

5. Procédé selon l'une des revendications 1 à 4, **caractérisé en ce qu**'en cas de détection précoce d'un obstacle par le conducteur, celui-ci pourra engager la traction automatique, que la commande de braquage proportionnellement défini de la traction toutes mues motrices est coupée par activation manuelle d'éléments de commande et que les roues de l'essieu arrière sont bloquées dans la position où elles étaient au moment de la détection de l'obstacle, pour être ensuite à nouveau couplées avec les roues de l'essieu avant, dans un rapport de braquage proportionnellement défini.

6. Procédé selon l'une des revendications 1 à 5, **caractérisé en ce qu**' en cas de mise hors service des capteurs de mesure, les roues arrière du véhicule sont tournées sur une position médiane où elles restent bloquées.

7. Dispositif d'intervention sur la direction d'un véhicule (1) doté d'une traction toutes roues motrices, avec des capteurs de mesure fixés sur le châssis (4) du véhicule et pivotants, grâce auxquels le véhicule (1) peut être conduit sûrement par trafic calme ou intense, pendant le service de travail réalisé par la mise en oeuvre des agrégats de travail (5, 8), et en empêchant sa collision avec des obstacles, sur des surfaces de circulation réduites ou limitées, telles que créneaux de stationnement délimités par des bordures et des véhicules en stationnement, ou sur d'autres surfaces limitées à la circulation, des senseurs (16; 16') étant disposés sur des points de mesure du véhicule (1), lesquels sont orientés vers des points de détection (17; 17'), forment des sections de mesure (s) et dont les données recueillies par les sections de mesure (s) sur la position et l'emplacement de véhicule sont transmises à un calculateur de bord relié à la traction toutes roues motrices par un mécanisme de réglage des roues arrière (3), pour l'exécution d'une commande de braquage desdites roues, **caractérisé en ce que** les capteurs de mesure pivotants ne sont autres que les agrégats de travail (5, 8) du véhicule et que les senseurs (16; 16') et points de détection (17; 17') sont disposés sur des moyens (11; 12) de commande de ces agrégats de travail, et en ce que les données saisies par les senseurs (16; 16') et transmises au calculateur de bord sont formées par modifications des sections de mesure (s; s'), lesquelles résultent de pivotements vers l'extérieur et l'intérieur des agrégats de travail (5; 8) du véhicule (1) déplacés en contactant le long de la limite (13) de la surface de circulation, de sorte que le processus de braquage des roues arrière (3) est bloqué dans le sens de la limite (13) si la section de mesure (s) formée entre les senseurs (16; 16') et les points de détection (17; 17') devient inférieure à une valeur définie.

8. Dispositif selon revendication 7, **caractérisé en ce que** les senseurs (16; 16') et les points de détection (17 ; 17') sont disposés sur des agrégats de travail (5 ; 8) à commande hydraulique.

9. Dispositif selon revendication 8, **caractérisé en ce que** les senseurs (16; 16') sont disposés sur des vérins de réglage (11 ; 12) pour la commande hydraulique des agrégats de travail, que les points de détection (17 ; 17') sont disposés sur les tiges de piston dépendantes des vérins de réglage (11 ; 12') et articulées sur une tringle (7 ; 7') supportant l'agrégat de travail correspondant.

10. Dispositif selon revendication 8 ou 9, **caractérisé en ce que** les senseurs (16 ; 16') sont disposés sur les vérins de réglage (11 ; 12) et les points de détection (17 ; 17') sur les tiges de piston dépendantes des vérins de réglage (11 ; 12) pour la commande de la trémie d'aspiration (8) et de la brosse de balayage circulaire (5).
